# EUROPEAN PATENT APPLICATION

(11) **EP 4 675 486 A1**
(43) Date of publication of application: **07.01.2026**
(21) Application number: 25168211.8
(22) Date of filing: 03.04.2025
(51) Int. Cl.: G06F 30/17, B60W 40/13, B64F 5/60, E04C 3/08, G06F 30/20, G06F 111/10, G06F 113/28, G06F 119/14, B64C 3/26

(54) **MODEL GENERATION FOR LOAD DISTRIBUTION SYSTEMS**

(30) Priority: 01.07.2024 US 202418761070
(71) Applicant: The Boeing Company, Arlington, VA 22202 (US)
(72) Inventor: Bhatt, Sanket, Arlington, 22202 (US); Venkatarayana Doddi Suresh, Karthik, Arlington, 22202 (US); Pathak, Ankita, Arlington, 22202 (US); Vrukshavai, Rajendra, Arlington, 22202 (US); Rawat, Vikram Singh, Arlington, 22202 (US)
(74) Representative: Witte, Weller & Partner Patentanwälte mbB

(57) **Abstract**

A computing system performs a method for generating a model of a load distribution system. The computing system receives a respective location of each load point, a respective force to be applied at each load point, and a force direction. A load segmentation loop is performed over a plurality of iterations that includes: selecting an iteration group of load points from among the set of load points, determining a weighted linear regression line and a center of force for the iteration group, identifying a first subgroup of load points that are located on a first side of a boundary line, and identifying a second subgroup of load points that are located on a second side of the boundary line. The model of the load distribution system is generated based on the center of force, the first subgroup, and the second subgroup of one or more iterations of the loop.

## Description

### FIELD

A disclosed invention relates generally to generating models of load distribution systems, and more particularly to the design of whiffletrees.

### BACKGROUND

Load distribution systems can be used to distribute a load to a plurality of load points according to a load profile. As an example, load distribution systems in the form of a whiffletree can be used to apply an input force to a test structure at a plurality of load points. Load distribution systems can include longitudinal members, lateral members, and junctions that join longitudinal members with lateral members.

A variety of structures can undergo testing through use of a load distribution system. As an example, aircraft undergo rigorous testing procedures before obtaining certification to operate commercial flights. Static testing allows engineers to analyze an aircraft's structural integrity without needing to leave the ground. Static testing can be a useful part of the testing process that helps speed up certification, as such testing does not require a completed and fully functional aircraft. Ultimately, the purpose of these procedures is to replicate forces that the aircraft may be subjected to once it does take to the skies. In furtherance of such testing, engineers apply test forces to areas such as the aircraft's wings, fuselage, and tail using load distribution systems. These tests often apply forces well beyond what the aircraft is expected to experience inflight so as to provide added assurances since, if the aircraft can withstand such heightened test forces, the aircraft's structure will be sufficient for typical operations.

### SUMMARY

According to an example, a computing system performs a method for generating a model of a load distribution system. The method includes receiving a load profile for a set of load points containing a plurality of load points. The load profile identifies a respective location of each load point of the set of load points within a three-dimensional reference frame, a respective force to be applied at each load point of the set of load points, and a force direction within the three-dimensional reference frame.

The method includes performing a load segmentation loop over a plurality of iterations. For an iteration of the plurality of iterations, the method includes: selecting an iteration group of load points for the iteration from among the set of load points, determining a weighted linear regression line for the iteration group within a reference plane having a predefined orientation (e.g., orthogonal) relative to the force direction based on the respective force to be applied at the respective location of each load point of the iteration group, determining a center of force for the iteration group within the reference plane based on the respective force to be applied at the respective location of each load point of the iteration group, identifying a first subgroup of load points among the iteration group of load points that are located on a first side of a boundary line that passes through the center of force and that intersects (e.g., is orthogonal to) the linear regression line, and identifying a second subgroup of load points among the iteration group of load points that are located on a second side of the boundary line opposite the first side.

As an example, the iteration group selected for an initial iteration of the plurality of iterations corresponds to the set of load points. In this example, the iteration group selected for subsequent iterations of the plurality of iterations corresponds to the first subgroup or the second subgroup identified by a previous iteration of the plurality of iterations.

The method includes generating the model of the load distribution system that is based on the center of force, the first subgroup, and the second subgroup of one or more iterations of the plurality of iterations.

### BRIEF DESCRIPTION OF THE DRAWINGS

FIG. 1 schematically depicts an example structure to which a distributed load can be applied.
FIG. 2 schematically depicts an example load distribution system.
FIG. 3 schematically depicts an example computing system that can provide a set of design tools for load distribution systems.
FIGS. 4A and 4B are flow diagrams depicting an example method for generating a model of a load distribution system.
FIGS. 5A, 5B, 5C, 5D, 5E, and 5F schematically depict respective locations of load points projected onto a plane.
FIG. 6 schematically depicts an example wireframe model of a load distribution system.
FIGS. 7A and 7B schematically depict an example graphical user interface.

### DETAILED DESCRIPTION

As briefly introduced above, load distribution systems typically feature an assembly of rigid members and inter-member junctions that distribute an input force to a plurality of load points of a test structure, such as an aircraft, as an example. Whiffletrees are load distribution systems that comprise articulated beams, straps and/or turn buckles that connect an array of bonded load pads and fittings to a hydraulic actuator or other input load, as an example. Load distribution systems, including whiffletrees provide a predetermined distribution of load from a single actuator or input force, over a defined area of a test structure called a load zone, through multiple load points applied to surfaces of the test structure either directly or through bonded load pads and fittings, as an example.

The development of load distribution systems, including whiffletrees can be time consuming and may involve human error which may result in undesirable or unbalanced distribution of loads to a structure. As an example, a distributed load for a structure may include tens, hundreds, or more load points in which a respective force is to be applied at each load point. As the quantity of load points increases, the quantity of potential configurations of a load distribution system for the load points increases at an even higher rate. As such, a load distribution system for given set of load points can have many possible configurations, some of which may be unsuitable or unfeasible to physically construct.

To address these and other issues, a computing system is disclosed that implements a regressor as part of generating a model of a load distribution system for a given set of load points. The regressor can utilize a regression algorithm to segment a group of load points into multiple subgroups to which various components of a load distribution system can be assigned. The model of the load distribution system can be outputted by the computing system for review by human users. Changes to the model, as may be requested by users for example, can be incorporated by the computing system into an updated model of the load distribution system.

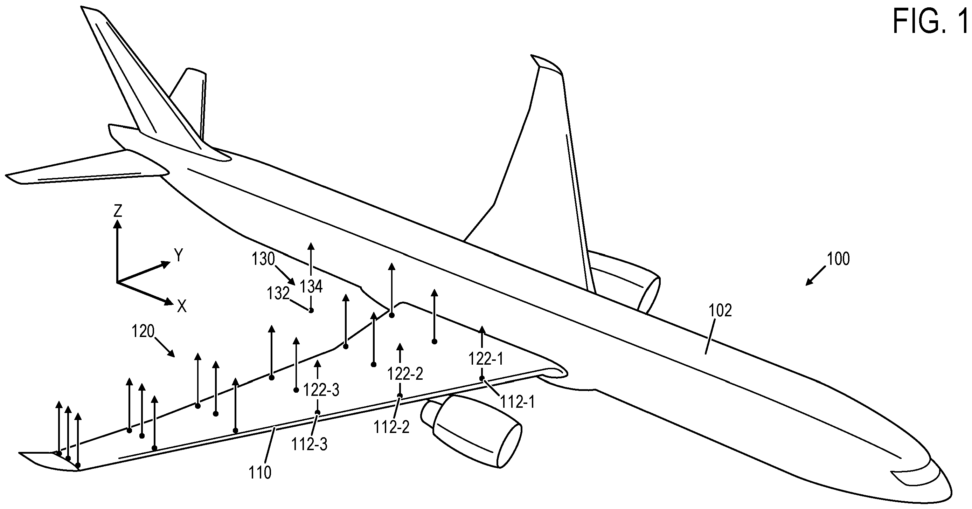

FIG. 1 schematically depicts an example structure 100 to which a distributed load can be applied. As an example, structure 100 can take the form of an aircraft 102 having a wing portion 110 that is to be tested by application of a distributed load 120. In this example, distributed load 120 is applied to wing portion 110 at a plurality of points 112-1, 112-2, 112-3, etc. of structure 100. It will be understood that structure 100 can take other forms, including but not limited to other aircraft configurations (e.g., fixed wing aircraft, rotatory wing aircraft, rockets, satellites and other space vehicles), land-based vehicles, and fixed-location, terrestrial structures (e.g., bridges and buildings). Furthermore, it will be understood that a distributed load can be applied to any portion of a structure by any suitable quantity of load points, including tens, hundreds, or more load points.

Each load point of structure 100 to which distributed load 120 is applied is located at a respective location in a three-dimensional reference frame that can be represented by an X, Y, Z coordinate system. Distributed load 120 includes a respective force applied at each of the plurality of load points of structure 100. As previously described, any suitable quantity of load points can be used with respect to a structure by which a respective force can be applied at each load point of the quantity of load points.

A respective force to be applied at each of the plurality of load points by distributed load 120 is represented schematically in FIG. 1. by a plurality of force vectors, examples of which include force vector 122-1 applied at load point 112-1, force vector 122-2 applied at load point 112-2, force vector 122-3 applied at load point 112-3, etc. It will be understood that the quantity of load points and associated force vectors can vary from the example depicted in FIG. 1 to include a greater or lesser quantity of load points and associated force vectors. In at least some examples, a magnitude of the respective force applied at each load point of a structure can differ among some or all of the load points. For example, force vector 122-1 applied at load point 112-1 can have a different magnitude of force than force vector 122-2 applied at load point 112-2.

Distributed load 120 can be achieved by application of an input force 130 represented schematically in FIG. 1 by a force vector 134 provided at or through a point 132 that is offset by some distance from structure 100. Depending on implementation, point 132 can correspond to a location of a pully or an actuator, as examples.

For illustrative purposes, each of the force vectors of distributed load 120 and input force 130 are oriented parallel to the positive Z-axis in the example of FIG. 1. It will be understood that force vectors of a distributed load and input force can have any suitable orientation relative to a structure.

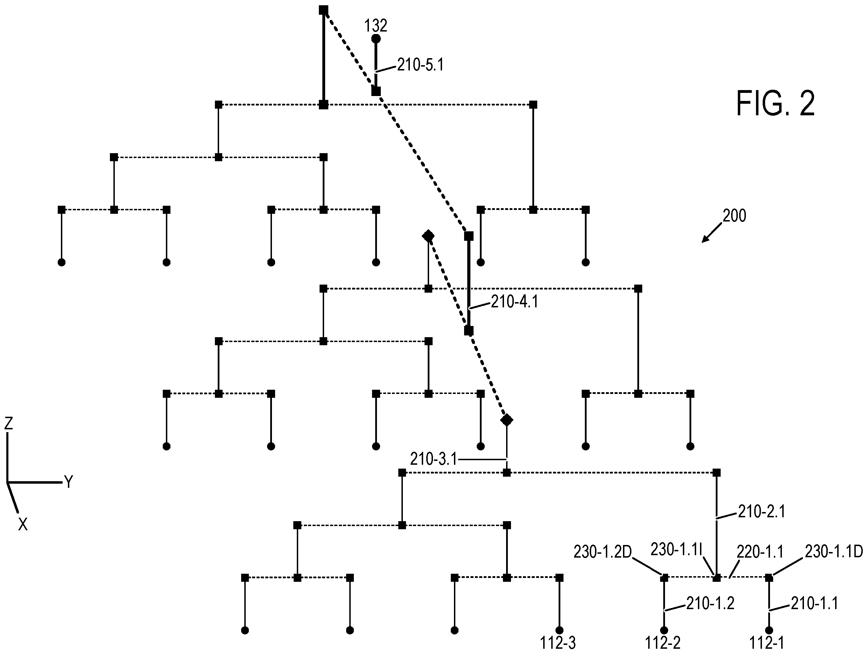

FIG. 2 schematically depicts an example load distribution system 200 that can be used to transfer and distribute input force 130 of FIG. 1 provided via point 132 to the plurality of load points (e.g., 112-1, 112-2, 112-3, etc.) of structure 100 as distributed load 120. For illustrative purposes, load distribution system 200 is schematically depicted in FIG. 2 as a wireframe model that includes longitudinal members, lateral members, and junctions that join longitudinal members with lateral members.

Longitudinal members of load distribution system 200 are represented in FIG. 2 by solid lines that are parallel to the Z-axis and to the force vectors of distributed load 120 and input force 130 of FIG. 1. Each longitudinal member transmits force longitudinally between two points. As an example, load distribution system 200 includes longitudinal members 210-1.1, 210-2.1, 210-3.1, 210-4.1, and 210-5.1 that transmit force between point 132 and load point 112-1 along the Z-axis dimension.

Depending on implementation, longitudinal members can be formed by a rigid member (e.g., a beam) to transmit force in either tension or compression, or longitudinal members can be formed by a flexible member (e.g., a cable, strap, chain, rope, etc.) to transmit force in tension. Lateral members of load distribution system 200 are represented in FIG. 2 by broken lines that are orthogonal to the Z-axis and to the force vectors of distributed load 120 and input force 130 of FIG. 1. Lateral members distribute force laterally between an intermediate point (e.g., an intermediate junction) of the lateral member and two other points (e.g., distal junctions) of the lateral member located on opposite sides of the intermediate point from each other. As an example, load distribution system 200 includes a lateral member 220-1.1 that distributes force between longitudinal member 210-2.1 and longitudinal members 210-1.1 and 210-1.2.

Junctions of load distribution system 200 that join longitudinal members with lateral members are represented in FIG. 2 by squares. As examples, an intermediate junction 230-1.1I joins longitudinal member 210-2.1 with lateral member 220-1.1 at an intermediate point along the lateral member; a first distal junction 230-1.1D joins longitudinal member 210-1.1 with lateral member 220-1.1 on a first side of intermediate junction 230-1.11; and a second distal junction 230-1.2D joins longitudinal member 210-1.2 with lateral member 220-1.1 on a second side of intermediate junction 230-1.11 opposite first distal junction 230-1.1D.

The intermediate junction of each lateral member can be located at a center of force of the two forces that are to be distributed to the two distal junctions of the lateral member. For example, where force vectors 122-1 and 122-2 of FIG. 1 to be applied at points 112-1 and 112-2 have the same magnitude, intermediate junction 230-1.1I can be located at a midpoint between first distal junction 230-1.1D and second distal junction 230-1.2D. By defining the location of the intermediate junction of a lateral member at the center of force, forces distributed via the two distal junctions of the lateral member can achieve their target magnitudes.

A load distribution system can be characterized by a quantity of tiers formed by its longitudinal members, lateral members, and junctions. The quantity of tiers of a load distribution system controls the quantity of load points to which an input force can be distributed. An example relationship between the quantity of tiers and the quantity of load points of a load distribution system includes 1 tier: 2 load points, 2 tiers: 3-4 load points, 3 tiers: 5-8 load points, 4 tiers: 9-16 load points, 5 tiers: 17-32 load points, 6 tiers: 33-64 load points, 7 tiers: 65-128 load points, 8 tiers: 129-256 load points, etc. As an example, load distribution system 200 of FIG. 2 has 4 tiers that can distribute an input force at point 132 to 16 load points (e.g., 112-1, 112-2, 112-3, etc.). It will be understood that a load distribution system can include any suitable quantity of tiers to provide a distributed load to any suitable quantity of load points.

The complexity of designing a load distribution system increases significantly as the quantity of load points increases. For example, as previously described, intermediate junctions of lateral members are located at a center of force to enable distribution of an input force to two distal junctions at their respective magnitudes. In multi-tier load distribution systems involving many load points, grouping load points can present numerous challenges due, for example, to the quantity of possible permutations, the potential for physical space conflicts between lateral and/or longitudinal members, and the need to achieve the desired load distribution profile across the load points. These and other challenges associated with development of load distribution systems can be addressed by a computing system of the present disclosure.

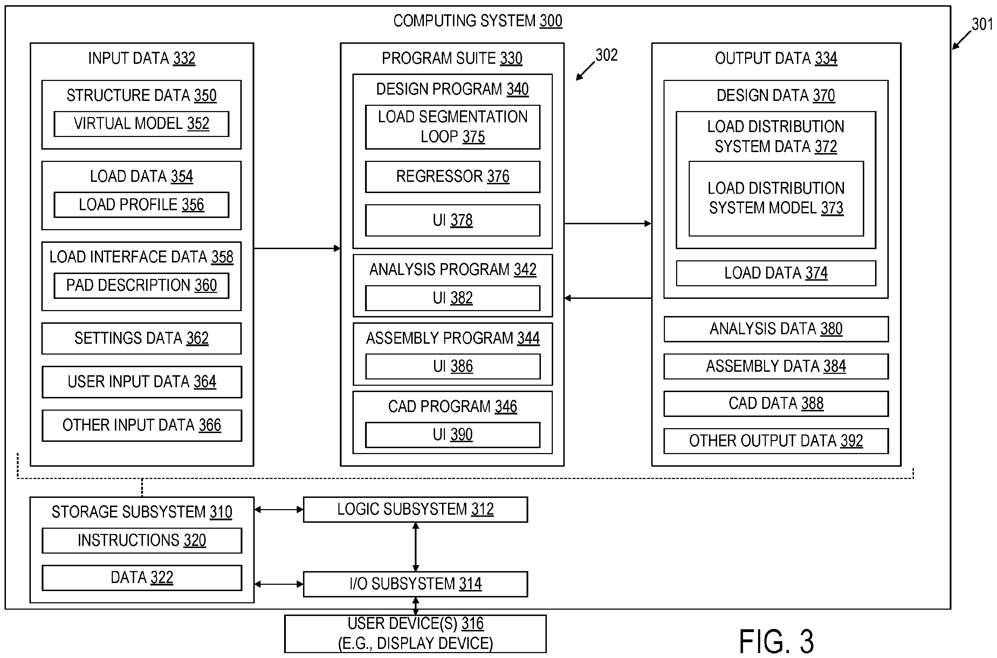

FIG. 3 schematically depicts an example computing system 300 that can provide a set of design tools 302 for load distribution systems. Computing system 300 includes a storage subsystem 310, a logic subsystem 312, and an input / output (I/O) subsystem 314, aspects of which are described in further detail herein. Computing system 300 can communicate with external devices such as one or more user devices 316. As an example, user devices 316 can include another computing device or a peripheral device (e.g., display device, input device, etc.) operable by a user. As described in further detail herein, computing system 300, as well as storage subsystem 310, logic subsystem 312, input / output subsystem 314, and user devices 316 are each examples of an article of manufacture, represented schematically in FIG. 3 by reference numeral 301. Accordingly, it will be understood that computing system 300, as well as storage subsystem 310, logic subsystem 312, input / output subsystem 314, and user devices 316 are physical devices.

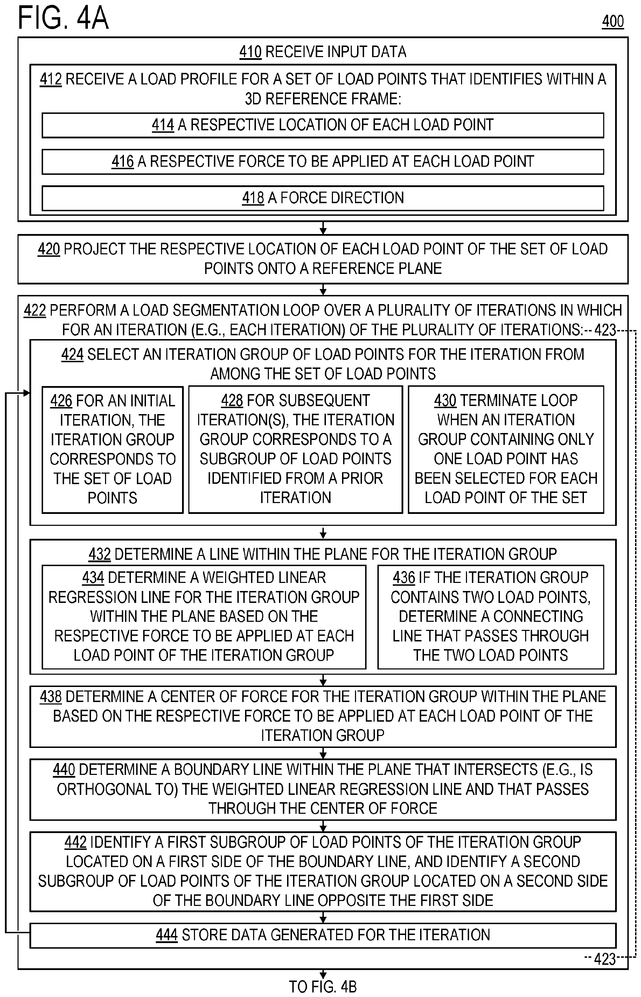

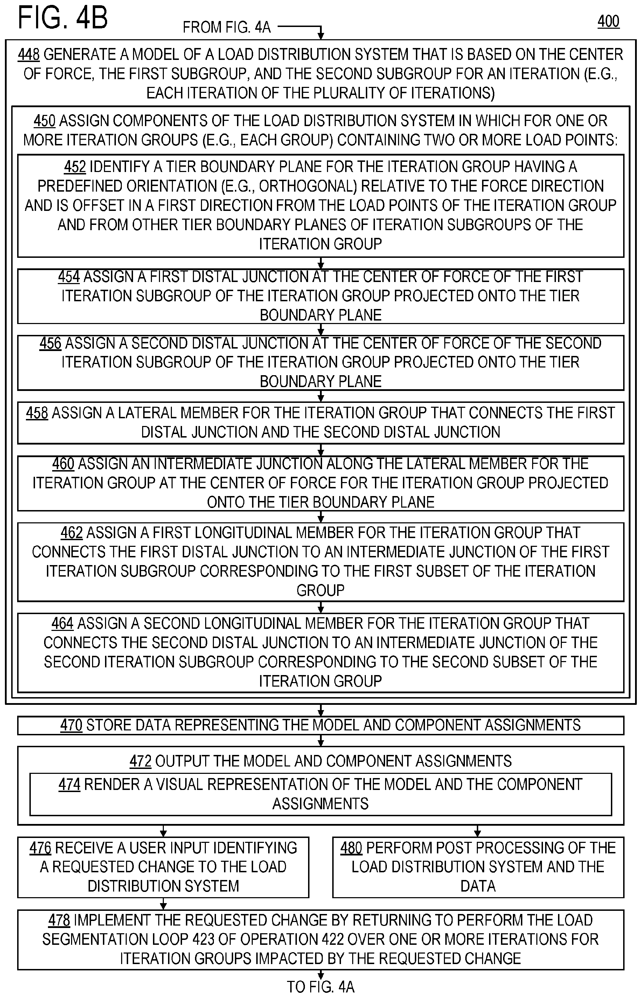

Storage subsystem 310 has instructions 320 stored thereon that are executable by logic subsystem 320. Program suite 330 is an example of instructions 312 stored at storage subsystem 310. Computing system 300 can perform method 400 of FIG. 4 by executing instruction 320, including one or more executable programs of program suite 330. Program suite 330 includes a design program 340, an analysis program 342, an assembly program 344, and a CAD program 346, aspects of which are described in further detail herein. The various programs of program suite 330 can provide design tools 302 to users, such as via user interfaces by which users can interact with the programs. Storage subsystem 310 further has other data 322 stored thereon that can be received by, processed by, and/or generated by program suite 330. Input data 332 and output data 334 are examples of data 322 stored at storage subsystem 310.

Input data 332 includes structure data 350 that defines aspects of a structure to which a distributed load is to be applied. Structure 100 of FIG. 1 is an example structure that can be defined by structure data 350. Structure data 350 can include a virtual model 352 (e.g., a three-dimensional CAD model) of the structure, as an example.

Input data 332 includes load data 354 that defines a distributed load that is to be applied to a structure, such as the structure defined by structure data 350. Load data 354 can include a load profile 356 for a set of load points that identifies: (1) a respective location of each load point of the set of load points within a three-dimensional reference frame, (2) a respective force (e.g., magnitude) to be applied at each load point of the set of load points, and (3) a force direction within the three-dimensional reference frame.

Input data 332 includes load interface data 358 that defines an interface between the load distribution system and the structure to which the distributed load is to be applied. As an example, load interface data 358 can include a pad description 360 that identifies a configuration and/or spatial dimensions of interface pads used to join the load distribution system to the structure at the various load points.

Input data 332 can include settings data 362 that can define user settings to be implemented by program suite 330. As an example, settings data 362 can define a design factor or factor of safety to be implemented by program suite 330. Input data 332 can include user input data 364, which can include various forms of user input provided to computing system 300 to control operation of program suite 330. Input data 332 can include other input data 366, which can be used by program suite 330.

Input data 332 received by program suite 330 can be used to generate output data 334. Portions of output data 334 can be used by program suite 330 in combination with input data 332 to generate other portions of output data 334, as described in further detail herein.

Output data 334 can include design data 370, such as load distribution system data 372 that defines aspects of a load distribution system generated by design program 340. Load distribution system data 372 can include data identifying various components of the load distribution system, including lateral members, longitudinal members, junctions, load points, and a point at which an input force is applied to the load distribution system, as well as the respective size and positioning of such components within a three-dimensional reference frame. The positioning of each component of the load distribution system can include a location and an orientation of the component within the three-dimensional reference frame. Load distribution system data 372 can include or take the form of a load distribution system model 373 that is generated by design program 340. Load distribution system model 373 can take various forms, including as a wireframe model, as described in further detail herein. Design data 370 can further include load data 374 that identifies loads at various locations or components within the load distribution system, including at various load points, junctions, lateral members, longitudinal members, and a point at which an input force is applied to the load distribution system.

Design program 340 of program suite 330 can receive input data 332 and can generate design data 370 based on the input data, including load distribution system data 372 and load data 374. Design program 340 can include a load segmentation loop 375, a regressor 376, and a user interface (UI) 378 by which a user can interact with the design program. Load segmentation loop 375 and regressor 376 can be used to perform aspects of method 400 of FIG. 4, as described in further detail herein.

Analysis program 342 of program suite 330 can receive input data 332 and design data 370 generated by design program 340, and can generate analysis data 380 based on the input data and design data. As an example, analysis data 380 can conduct force analysis with respect to forces defined by load data 374 being applied to components of a load distribution system defined by load distribution system data 372 having a particular material composition and configuration to determine whether the components are capable of withstanding such forces. Analysis program 342 can include a user interface 382 by which a user can interact with the analysis program. Analysis data 380 can indicate extent to which the forces defined by load data 374 relate to a maximum force (e.g., exceed or represent a fraction of the maximum force) that can be handled by each component of the load distribution system.

Assembly program 344 of program suite 330 can receive input data 332, design data 370, and analysis data 380 to generate assembly data 384. As an example, assembly data 384 can define a physical assembly of components and their material composition for a load distribution system. In contrast to models that may be generated by design program 340 for a load distribution system, assembly program 344 can include additional specifications of physical components, such as a size and configuration of rigid members and junctions used for a physical embodiment of the load distribution system, as well as fasteners and other subcomponents. Assembly program 344 can include a user interface 386 by which a user can interact with the assembly program.

CAD program 346 can receive input data 332, design data 370, analysis data 380, and assembly data 384 to generate CAD data 388. As an example, CAD data 388 can represent a dimensioned model of a physical embodiment of the load distribution system that may be used to construct or manufacture the load distribution system. CAD program 346 can include a user interface 390 by which a user can interact with the CAD program. Output data 334 can include other output data 392 generated by program suite 330.

FIGS. 4A and 4B are flow diagrams depicting an example method 400 for generating a model of a load distribution system for a given set of load points. The set of load points can include a plurality of load points, as an example. It will be understood that any suitable quantity of load points can be used in connection with method 400, including tens, hundreds, thousands, or more load points.

Method 400 can be performed by a computing system, such as example computing system 300 of FIG. 3. As an example, method 400 can be performed by computing system 300 executing design program 340 based on input data 332 alone or in combination with output data 334, as described in further detail herein.

Referring to FIG. 4A, at 410, the method includes receiving input data. Examples of input data received at 410 include input data 332 of FIG. 3. As an example, at 412, the method includes receiving a load profile (e.g., load profile 356 of FIG. 3) for a set of load points that identifies: a respective location 414 of each load point of the set of load points within a three-dimensional reference frame; a respective force 416 to be applied at each load point of the set of load points; and a force direction 418 within the three-dimensional reference frame.

In examples where interfacing components (e.g., pads or other components) are to be used at a surface of a structure to which a distribution load is to be applied, the respective location of each load point can correspond to an interface between the load distribution system and the interfacing components. For example, where pads are to be used having a defined height or thickness from the surface of the structure, the load points can be offset from the structure by the defined height or thickness.

In at least some examples, each load point of the set of load points can be represented within the input data by a tuple containing an X, Y, Z location of the load point within an X, Y, Z coordinate system, and a force magnitude (F) to be applied to that load point. Each load point of the set of load points has a different respective location relative to the other load points of the set. The respective force to be applied to each load point can differ among some or all of the load points of the set of load points in at least some examples.

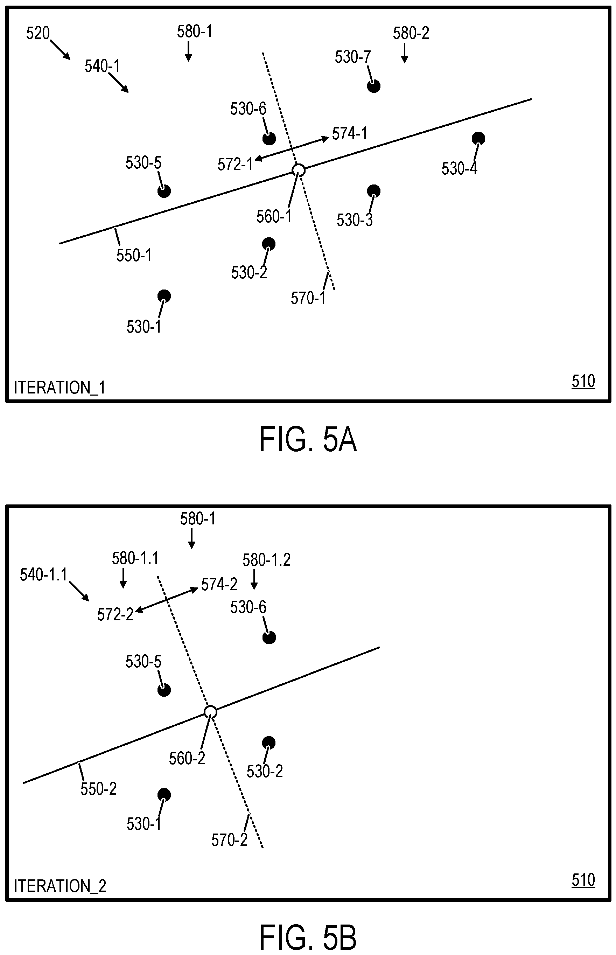

At 420, the method includes projecting the respective location 414 of each load point of the set of load points onto a reference plane having a predefined orientation relative to the force direction 418. As an example, the reference plane is orthogonal to the force direction. Referring also to FIG. 5A, an example reference plane 510 that is orthogonal to force direction 418 is schematically depicted. As an illustrative example, a set of load points 520 contains 7 load points within FIG. 5A for which respective locations 530-1, 530-2, 530-3, 530-4, 530-5, 530-6, and 530-7 are projected onto reference plane 510.

The method at 422 includes performing a load segmentation loop 423 over a plurality of iterations. Load segmentation loop 423 of FIG. 4A is an example of previously described load segmentation loop 375 of FIG. 3. Load segmentation loop 423 can be used to segment the set of load points into a plurality of groups to which features of a load distribution system can be assigned. At each iteration of loop 423, a plurality of load points can be segmented into two subgroups in which each subgroup contains one or more load points. The quantity of iterations over which loop 423 is performed depends on a quantity of load points contained in the set of load points identified by the load profile received at operation 412.

For an iteration of loop 423 (e.g., for each iteration of loop 423), the method at 424 includes selecting an iteration group of load points for the iteration from among the set of load points.

As indicated at 426, for an initial iteration of loop 423 (i.e., a first iteration referred to herein as ITERATION_1), the iteration group selected at operation 424 corresponds to the set of load points indicated by the load profile received at operation 412 (i.e., all load points).

As indicated at 428, for a subsequent iteration (i.e., ITERATION_2 through ITERATION_N) of loop 423 following the initial iteration (ITERATION_1), the iteration group selected at operation 424 corresponds to a subgroup of load points identified from a prior iteration. Thus, for a subsequent iteration (i.e., ITERATION_2 through ITERATION_N), fewer than all load points of the set of load points identified by the load profile received at operation 412 are selected for the iteration group.

As indicated at 430 of operation 422, loop 423 is terminated when an iteration group containing only one load point has been selected for each load point of the set of load points. Upon termination of loop 423, the method proceeds to operation 448 of FIG. 4B.

As previously described with reference to operation 420, the respective locations of the set of load points can be projected onto a reference plane. For each iteration of loop 423, the method at 432 includes determining a line within the reference plane for the iteration group selected at operation 424. The line determined at operation 432 can be represented by an orientation (e.g., an angle or slope) within a reference frame of the reference plane. The line determined at operation 432 can be used to determine placement of a lateral member of a load distribution system, as an example.

As indicated at 434, where the iteration group contains a plurality of load points (e.g., two, three or more load points), the line determined at operation 432 for the iteration group can take the form of a weighted linear regression line. Alternatively or additionally, as indicated at 436, if the iteration group contains only two load points, the line determined at operation 432 can take the form of a connecting line that passes through the two respective locations of the two load points of the iteration group.

As described above, at operation 434, the method includes determining a weighted linear regression line for the iteration group of load points within the reference plane based on the respective force to be applied at the respective location of each load point of the iteration group. As an example, the weighted linear regression line can be determined at operation 434 by regressor 376 of FIG. 3 executed by computing system 300 performing weighted linear regression with respect to the load points of the iteration group. As an example, the weighted linear regression line can be determined by applying a linear least squares formulation in which each location of a load point of the set of load points is weighted within the linear least squares formulation by the magnitude of the respective force to be applied at that location as a weighting factor.

Referring to FIG. 5A, for example, where a set of load points 520 of the load profile received at operation 412 contains 7 load points, an iteration group 540-1 for an initial iteration of loop 423 contains the 7 load points. In FIG. 5A, for example, a weighted linear regression line 550-1 has been determined for iteration group 540-1 based on the respective forces to be applied at respective locations 530-1, 530-2, 530-3, 530-4, 530-5, 530-6, and 530-7. Weighted linear regression line 550-1 can be used to determine an orientation of a lateral support of the load distribution system.

For each iteration of loop 423, the method at 438 includes determining a center of force for the iteration group within the reference plane based on the respective force to be applied at the respective location of each load point of the iteration group. For example, in FIG. 5A, a center of force 560-1 has been determined for iteration group 540-1 based on the respective forces to be applied at respective locations 530-1, 530-2, 530-3, 530-4, 530-5, 530-6, and 530-7. The center of force can be used to determine placement a longitudinal member and one or more junctions of the load distribution system.

For each iteration of loop 423, the method at 440 includes determining a boundary line within the reference plane for the iteration group that intersects (e.g., is orthogonal to) the line determined at operation 432 and that passes through the center of force determined at operation 438. For example, in FIG. 5A, a boundary line 560-1 has been determined for iteration group 540-1 that is orthogonal to weighted linear regression line 550-1 and that passes through center of force 560-1.

For each iteration of loop 423, the method at 442 includes identifying a first subgroup of load points of the iteration group that are located on a first side of the boundary line, and identifying a second subgroup of load points of the iteration group that are located on a second side of the boundary line opposite the first side. For example, in FIG. 5A, a first subgroup of load points 580-1 having respective locations 530-1, 530-2, 530-5, and 530-6 is identified on a first side 572-1 of boundary line 570-1, and a second subgroup of load points 580-2 having respective locations 530-3, 530-4, and 530-7 is identified on a second side 574-1 of boundary line 570-1.

For each iteration of loop 423, the method at 444 includes storing data generated for the iteration, including data representing the iteration group of load points selected at operation 424, data representing the line determined at operation 432, data representing the center of force determined at operation 438, data representing the boundary line determined at operation 440, and data representing the first subgroup of load points and the second subgroup of load points identified at operation 442, as examples. The data stored at operation 444 can form part of design data 370 of FIG. 3, as an example. Upon completion of loop 423, the method can return to operation 424 for a subsequent iteration.

For a subsequent iteration (e.g., ITERATION_2) of loop 423, the first subgroup of load points identified at operation 442 by a previous iteration (e.g., ITERATION_1) can be selected as an iteration group at operation 426 by the approach indicated at 428. For example, FIG. 5B schematically depicts respective locations 530-1, 530-2, 530-5, and 530-6 of first subgroup of load points 580-1 identified in FIG. 5A projected onto reference plane 510. In the example of FIG. 5B, the first subgroup of load points 580-1 has been selected as an iteration group 540-1.1 at operation 426 by the approach indicated at 428 within the subsequent iteration (e.g., ITERATION_2). Additionally, in the example of FIG. 5B, loop 423 is performed for the subsequent iteration (e.g., ITERATION_2) to determine a weighted linear regression line 550-2 at operation 434, determine a center of force 560-2 at operation 438, determine a boundary line 570-2 at operation 440, identify a first subgroup of load points 580-1.1 on a first side 572-2 of boundary line 570-2 and a second subgroup of load points 580-1.2 on a second side 574-2 of boundary line 570-2 at operation 442. Within FIG. 5B, first subgroup of load points 580-1.1 have respective locations 530-1 and 530-5, and second subgroup of load points 580-1.2 have respective locations 530-2 and 530-6.

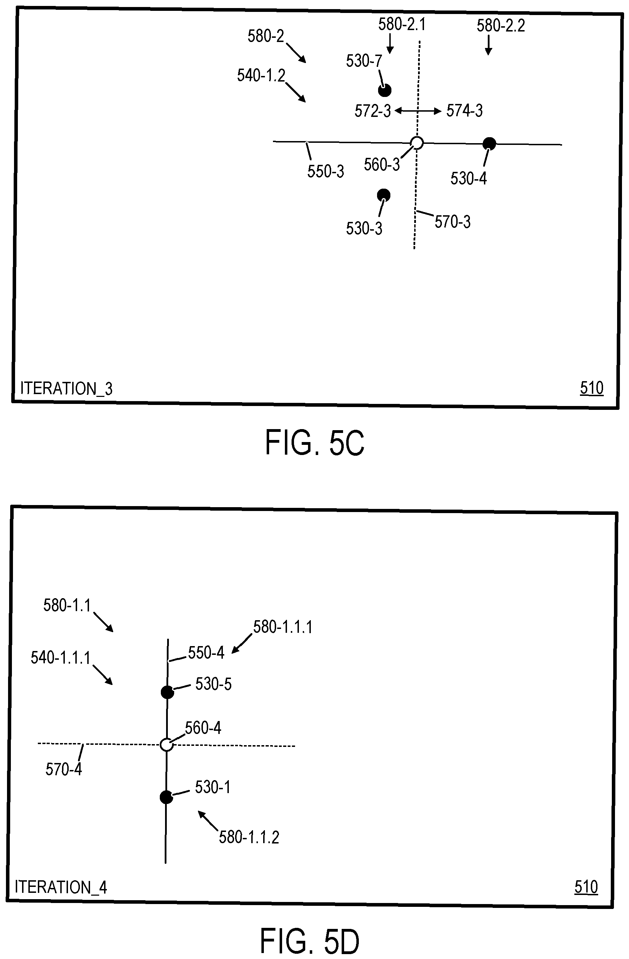

For another subsequent iteration (e.g., ITERATION_3) of loop 423, the second subgroup of load points identified at operation 442 by a previous iteration (e.g., ITERATION_1) can be selected as an iteration group at operation 424. For example, FIG. 5C schematically depicts respective locations 530-3, 530-4, and 530-7 of the second subgroup of load points 580-2 previously identified in FIG. 5A projected onto reference plane 510. In the example of FIG. 5C, the second subgroup of load points 580-2 has been selected as an iteration group 540-1.2 at operation 424 within the subsequent iteration (e.g., ITERATION_3).

Additionally, in the example of FIG. 5C, loop 423 is performed for the subsequent iteration (e.g., ITERATION_3) to determine a weighted linear regression line 550-3 at operation 434, determine a center of force 560-3 at operation 438, determine a boundary line 570-3 at operation 440, and identify a first subgroup of load points 580-2.1 on a first side 572-3 of boundary line 570-3 and a second subgroup of load points 580-2.2 on a second side 574-3 of boundary line 570-3 at operation 442. Within FIG. 5C, first subgroup of load points 580-2.1 have respective locations 530-3 and 530-7, and second subgroup of load points 580-2.2 containing a single load point has respective location 530-4.

FIG. 5D depicts an example of another subsequent iteration (e.g., ITERATION_4) performed with respect to load points of the first subgroup 580-1.1 of FIG. 5B being selected as an iteration group 540.1.1.1. In this example, the load points of iteration group 540.1.1.1 have respective locations 530-1 and 530-5. Also within FIG. 5D, a line 550-4 has been determined at operation 432, for example, as a weighted linear regression line at operation 434 or as a connecting line that passes through the load points at respective locations 530-1 and 530-5 at operation 436. A center of force 560-4, a boundary line 570-4, and a first subgroup 580-1.1.1 and a second subgroup 580-1.1.2 each containing a single load point have been identified for the iteration in FIG. 5D.

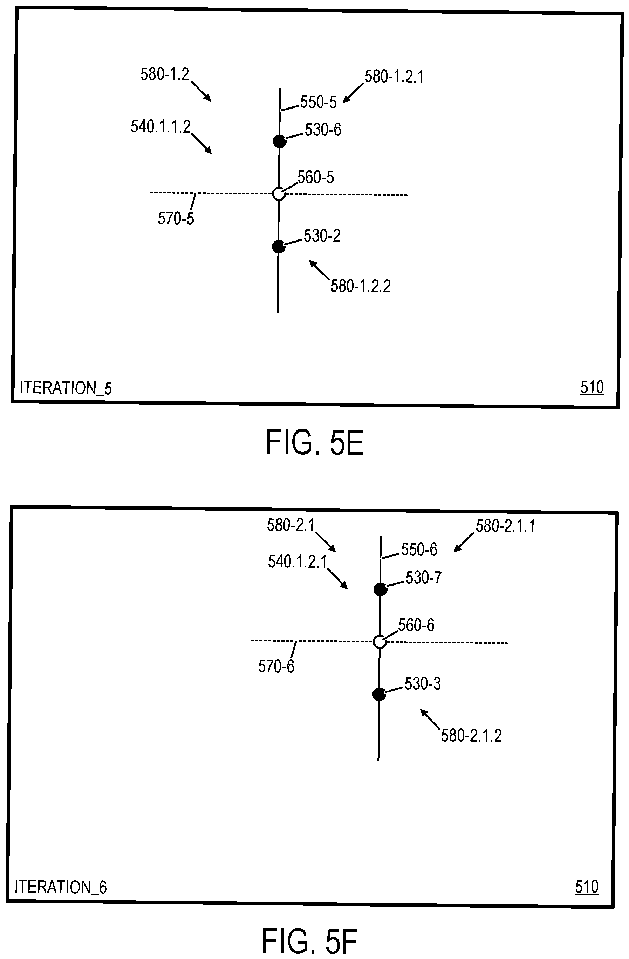

FIG. 5E depicts an example of another subsequent iteration (e.g., ITERATION_5) performed with respect to load points of the second subgroup 580-1.2 of FIG. 5B being selected as an iteration group 540.1.1.2. In this example, the load points of iteration group 540.1.1.2 have respective locations 530-2 and 530-6. Within FIG. 5E, a line 550-5 has been determined at operation 432, for example, as a weighted linear regression line at operation 434 or as a connecting line that passes through the load points at respective locations 530-2 and 530-5 at operation 436. A center of force 560-5, a boundary line 570-5, and a first subgroup 580-1.2.1 and a second subgroup 580-1.2.2 each containing a single load point have been identified for the iteration.

FIG. 5F depicts an example of another subsequent iteration (e.g., ITERATION_6) performed with respect to load points of the first subgroup 580-2.1 of FIG. 5C being selected as an iteration group 540.1.2.1. In this example, the load points of iteration group 540.1.2.1 have respective locations 530-3 and 530-7. Within FIG. 5F, a line 550-6 has been determined at operation 432, for example, as a weighted linear regression line at operation 434 or as a connecting line that passes through the load points at respective locations 530-3 and 530-7 at operation 436. A center of force 560-6, a boundary line 570-6, and a first subgroup 580-2.2.1 and a second subgroup 580-2.1.2 each containing a single load point have been identified for the iteration.

As previously described, at 430, loop 423 of FIG. 4A is terminated when an iteration group containing only one load point has been selected for each load point of the set of load points. Upon termination of loop 423, the method proceeds to operation 448 of FIG. 4B.

At operation 448 of FIG. 4B, the method includes generating a model of a load distribution system. As described in further detail herein, the model generated at operation 448 can be based on the center of force, the first subgroup, and the second subgroup for one or more iterations of the plurality of iterations of loop 423. As an example, the model generated at operation 448 is based on the center of force, the first subgroup, and the second subgroup for each iteration of the plurality of iterations of loop 423.

As part of operation 448, the method at 450 includes assigning components of the load distribution system based on data generated by performing load segmentation loop 423 at operation 422. As previously described with reference to FIG. 2, components of a load distribution system can include lateral members, longitudinal members, and junctions that connect lateral members to longitudinal members. As part of operation 450, for each iteration group selected at operation 424 of FIG. 4A that contains two or more load points, the method can include performing operations 452 - 464.

At 452, the method includes identifying a tier boundary plane for the iteration group that has a predefined orientation relative to the force direction and is offset in a first direction from the load points of the iteration group and from other tier boundary planes of iteration subgroups of the iteration group. As an example, the predefined orientation of the tier boundary plane is orthogonal to the force direction. As previously described, an iteration subgroup corresponds to a subset of load points of an iteration group identified at operation 442 by a previous iteration of loop 423. The tier boundary plane identified at operation 452 may be assigned a respective tier height within the three-dimensional reference frame in which the tier height is measured in a dimension parallel to the force dimension. The tier height can be user-defined in at least some examples, and can be stored within input data 332 of FIG. 3 as settings data 362 or user input data 364. As described in further detail herein, a lateral support and associated junctions can be assigned to each iteration group at locations residing within, or can be defined relative to, the tier boundary plane identified for the iteration group.

In at least some examples, operation 452 may be performed with respect to iteration groups having one or two load points prior to progressing to iteration groups containing greater quantities of load points. This approach can be used to begin assignment of components at or near load points and progressing through the load distribution system away from the load points and toward a point at which an input force is to be applied. As an example, a first tier boundary plane for a first iteration group containing two load points can be offset from the two load points by a distance so that the first tier boundary plane is located at a first tier height. A second boundary plane for a second iteration group containing the two load points of the first iteration group and one or more other load points can be offset from the first tier boundary plane by a distance so that the second tier boundary plane is located at a second tier height. This approach can be repeated to identify tier boundary planes progressing further and further from the load points.

At 454, the method includes assigning a first distal junction at the center of force of the first iteration subgroup of the iteration group projected onto the tier boundary plane of the iteration group identified at operation 452. Referring to FIGS. 5A and 5B, for example, the first distal junction for iteration group 540-1 of FIG. 5A includes iteration group 540-1.1 as the first subgroup 580-1. In this example, the first distal junction for iteration group 540-1 is assigned at the center of force 560-2 of first subgroup 580-1 corresponding to iteration group 540-1.1 shown in FIG. 5B. The center of force 560-2 is projected onto the tier boundary plane identified for the iteration group at operation 452. Where the subgroup of the iteration group contains a single load point, the respective location of that load point is used as the center of force of the iteration subgroup.

At 456, the method includes assigning a second distal junction at the center of force of the second iteration subgroup of the iteration group projected onto the tier boundary plane of the iteration group. Referring to FIGS. 5A and 5C, for example, the second distal junction for the iteration group 540-1 of FIG. 5A is assigned at the center of force 560-3 of the iteration group 540-1.2 of FIG. 5C corresponding to subgroup 580-2 shown in FIG. 5A. In this example, the center of force 560-3 is projected onto the tier boundary plane identified for the iteration group at operation 452. As previously described, where the subgroup of the iteration group contains a single load point, the respective location of that load point is used as the center of force of the iteration subgroup.

At 458, the method includes assigning a lateral member for the iteration group that connects the first distal junction and the second distal junction assigned at operations 454 and 456. As an example, this lateral member resides within the tier boundary plane and is orthogonal to the force direction.

At 460, the method includes assigning an intermediate junction along the lateral member for the iteration group at the center of force for the iteration group projected on the tier boundary plane. Referring to FIG. 5A, for example, the intermediate junction assigned to the iteration group 540-1 is located at the center of force 560-1.

At 462, the method includes assigning a first longitudinal member for the iteration group that connects the first distal junction assigned at operation 454 to an intermediate junction or to a single load point of the first iteration subgroup of the iteration group. As an example, the first longitudinal member is parallel to the force direction. In cases where the first iteration subgroup contains two or more load points, the first longitudinal member of the iteration group assigned at operation 462 connects to the intermediate junction of the first iteration subgroup, which is located at the center of force of the first iteration subgroup. In cases where the first iteration subgroup contains a single load point, the first longitudinal member of the iteration group assigned at operation 462 connects to the single load point, which is the center of force of the first iteration subgroup.

At 464, the method includes assigning a second longitudinal member for the iteration group that connects the second distal junction (e.g., assigned at operation 456) to an intermediate junction or to a single load point of the second iteration subgroup of the iteration group. As an example, the second longitudinal member is parallel to the force direction. In cases where the second iteration subgroup contains two or more load points, the second longitudinal member of the iteration group assigned at operation 464 connects to the intermediate junction of the second iteration subgroup, which is located at the center of force of the second iteration subgroup. In cases where the second iteration subgroup contains a single load point, the second longitudinal member of the iteration group assigned at operation 464 connects to the single load point, which is located at the center of force of the second iteration subgroup.

Upon completion of operation 450, each iteration group has been assigned the following structural components of the load distribution system: a first distal junction, a second distal junction, an intermediate junction, a lateral member, a first longitudinal member, and a second longitudinal member. The location of these components is defined in relation to the tier boundary plane that was identified for the iteration group. The tier boundary plane represents a virtual component of the load distribution system that can be used to assist in assignment of structural components of the load distribution system.

At 470, the method includes storing data representing the model of the load distribution system generated at operation 448 and the component assignments performed at operation 450 for each iteration group. The data stored at operation 470 can take the form of load distribution system data 372 of output data 334 of FIG. 3. In at least some examples, each iteration group can be identified within the data stored at operation 470 by an iteration group identifier, and each component of the load distribution system assigned at operation 450 can be identified within the data stored at operation 470 by a component identifier. The data stored at operation 470 can associate component identifiers with iteration group identifiers to identify components that were assigned for each iteration group.

At 472, the method includes outputting the model of the load distribution system generated at operation 448 and the component assignments performed at operation 450 for each iteration group. As part of operation 472, the method at 474 can include rendering a visual representation of the model of the load distribution system and the component assignments. Outputting data at operation 472 and rendering the visual representation performed at operation 474 can include retrieving and processing the data (e.g., load distribution system data 372) stored at operation 470. In at least some examples, the visual representation of the model rendered at operation 474 can take the form of a wireframe model of the load distribution system. However, other suitable visual representations of the load distribution system can be provided.

Rendering the visual representation of the model of load distribution system at 474 can including presenting or outputting the visual representation of the model via a display device. Other forms of data (e.g., numerical values) representing the component assignments can be output at operation 472 via a display device or other suitable output device. User device 316 of FIG. 3 is an example of a device (e.g., a display device) by which a visual representation of data can be presented to a user. Users can review the visual representation of the model and other forms of data output at operation 472 to confirm if the load distribution system represented by the model and associated component assignments is acceptable for a given implementation.

At 476, the method includes receiving a user input identifying a requested change to the load distribution system. As an example, the user input can be received via a user device, such as user device 316 of FIG. 3. The user input can identify a requested change to one or more components assigned at operation 450. As a first example, the user input can identify a requested change to an orientation of a lateral member of the load distribution system. For example, the requested change can identify a range (e.g., an angular range) within which the lateral member is to be reorientated. As another example, the requested change can identify a regrouping of load points that differs from the iteration groups previously selected at operation 424.

At 478, the method includes implementing the requested change by returning to perform load segmentation loop 423 of operation 422 over one or more iterations for the iteration groups impacted by the requested change. In an example where the requested change indicates a regrouping of load points, one or more iterations of load segmentation loop 423 can be performed using the regrouping of load points to select iteration groups at operations 424 and 428 that are consistent with the requested change. In this example, iteration subgroups extending from an iteration group that is consistent with the requested change can be regrouped through selection performed at operations 424 and 428 in a manner consistent with the requested change. In an example where the requested change identifies an angular range of a particular lateral member, an iteration group can be selected at operations 424 and 428 that provides a lateral member within that angular range. Upon selection of the iteration group that provides the requested change, iteration subgroups to that iteration group can be selected by performing additional iterations of loop 423, as previously described.

Aspects of method 400 that include and follow performance of load segmentation loop 423 are again performed to store and output data (e.g., updated data) representing the component assignments of an updated load distribution system at operations 470 and 472 following incorporation of the requested change. The user can again review the data, including a rendered visual representation of the updated load distribution system to determine if further changes are to be made. This approach enables a user to refine a load distribution system by implementation of one or more requested changes.

At 480, the method includes performing post processing of the load distribution system and data representing the component assignments. Examples of post processing that can be performed at operation 480 include: (1) analyzing the load distribution system and associated data via analysis program 342 of FIG. 3 to generate analysis data 380, (2) assembling a virtual model of the load distribution system via assembly program 344 to generate assembly data 384, and (3) performing computer aided design (CAD) via CAD program 346 to generate CAD data 388 (e.g., CAD drawings).

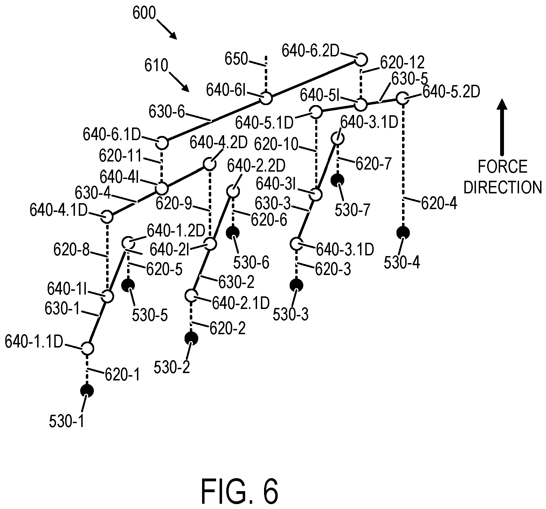

FIG. 6 schematically depicts an example wireframe model of a load distribution system that can be generated for the set of load points 520 of FIG. 5A using method 400 of FIGS. 4A and 4B. Within FIG. 6, the respective locations 530-1, 530-2, 530-3, 530-4, 530-5, 530-6, and 530-7 of the set of load points 520 are shown connected to longitudinal members 620-1, 620-2, 620-3, 620-4, 620-5, 620-6, and 620-7, respectively.

Within FIG. 6, the load points located at respective locations 530-1 and 530-5 forming iteration group 540-1.1.1 of FIG. 5D are assigned lateral member 630-1 having intermediate junction 640-1I, and distal junctions 640-1.1D and 640-1.2D connected to longitudinal members 620-1 and 620-5, respectively. The load points located at respective locations 530-2 and 530-6 forming iteration group 540-1.1.2 of FIG. 5E are assigned lateral member 630-2 having intermediate junction 640-2I, and distal junctions 640-2.1D and 640-2.2D connected to longitudinal members 620-2 and 620-6, respectively. The load points located at respective locations 530-3 and 530-7 forming iteration group 540.1.2.1 of FIG. 5F are assigned lateral member 630-3 having intermediate junction 640-3I, and distal junctions 640-3.1D and 640-3.2D connected to longitudinal members 620-3 and 620-7, respectively.

Within FIG. 6, iteration group 540-1.1 of FIG. 5B containing load points having respective locations 503-1, 530-2, 530-5, and 530-6 are assigned lateral member 630-4 having intermediate junction 640-4I, and distal junctions 640-4.1D and 640-4.2D connected to longitudinal members 620-8 and 620-9, respectively. In this example, longitudinal member 620-8 is connected to intermediate junction 640-1I, and longitudinal member 620-9 is connected to intermediate junction 640-2I.

Within FIG. 6, iteration group 540-1.2 of FIG. 5C containing load points having respective locations 503-3, 530-4, and 530-7 are assigned lateral member 630-5 having intermediate junction 640-5I, and distal junctions 640-5.1D and 640-5.2D connected to longitudinal members 620-10 and 620-4, respectively. In this example, longitudinal member 620-10 is connected to intermediate junction 640-3I, and longitudinal member 620-4 is connected to the load point having respective location 530-4.

Within FIG. 6, iteration group 540-1 of FIG. 5A containing the set of 7 load points is assigned lateral member 630-6 having intermediate junction 640-6I, and distal junctions 640-6.1D and 640-6.2D connected to longitudinal members 620-11 and 620-12, respectively. In this example, longitudinal member 620-11 is connected to intermediate junction 640-4I, and longitudinal member 620-12 is connected to intermediate junction 640-5I. In at least some examples, a longitudinal member 650 can be included that is connected to the intermediate junction (e.g., 640-6I) for the iteration group containing the set of load points. An input force can be applied at intermediate junction 640-6I or along longitudinal member 650 in the example of FIG. 6 to distribute respective forces to the set of load points of load distribution system 610.

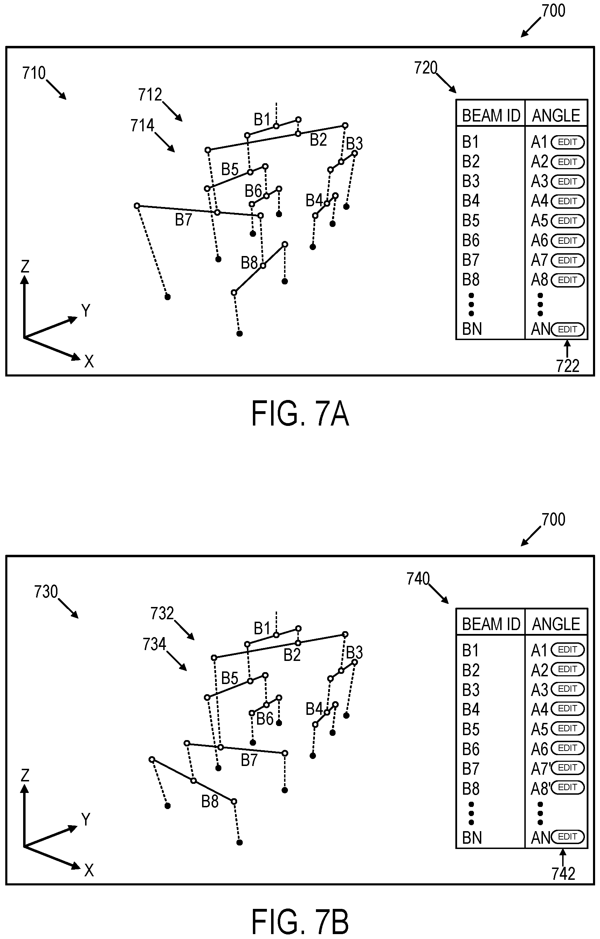

FIGS. 7A and 7B schematically depict an example graphical user interface (GUI) 700 that is an example of user interface 378 of design program 340 of FIG. 3. In FIG. 7A, GUI 700 presents a visual representation 710 of a load distribution system 712. In this example, visual representation 710 of load distribution system 712 takes the form of a wireframe model 714 in which lateral members are represented by solid lines, longitudinal members are represented by broken lines, load points are represented by filled circles, and junctions are represented by unfilled circles.

GUI 700 of FIG. 7A also presents data 720 representing component assignments for load distribution system 712. In this example, data 720 presented by GUI 700 includes BEAM ID, which provides a list lateral member identifiers of load distribution system 712, including identifiers B1 through BN (where "N" represents the quantity of lateral members). Data 720 further includes an angle associated with each later member identifier that represents an orientation of that lateral member within a plane orthogonal to the force direction, including identifiers A1 through AN (where "N" again represents the quantity of lateral members). As an example, a lateral member of load distribution system 712 identified as B7 has an associated angle A7 (e.g., 90 degrees within the three-dimensional reference frame).

As previously described with reference to operation 476 of FIG. 4B, a user input identifying a requested change to the load distribution system can be received by the computing system. As an example, a requested change of an orientation of a lateral member of load distribution system 712 can be received via GUI 700 via a set of editing tools 722 or other suitable user interface. In this example, editing tools 722 enable a user to request a change of an orientation of a particular lateral member, such as the later member identified as B7 within GUI 700. It will be understood that editing tools 722 are represented schematically in FIGS. 7A and 7B, and that a user input requesting a change to a load distribution system can be received via any suitable interface. In at least some examples, a requested change of an orientation of a lateral member (e.g., B7) can be received as a user selection of an angular increment (e.g., 90 degree or other suitable increment) in a positive or negative rotational direction.

As an example, a user input can be received via editing tools 722 requesting a change of a current angle of 90 degrees of lateral member B7 in an increment of 90 degrees in a negative rotational direction. Responsive to the requested change, the computing system implements method 400 of FIGS. 4A and 4B to generate an updated load distribution system in which lateral member (e.g., B7) has a different orientation (e.g., 21 degrees) from the previous orientation (e.g., 90 degrees). As previously described with reference to method 400 of FIG. 4, implementing a requested change to a load distribution system can impact other components of the load distribution system due to differences how load points are selected for iteration groups. For example, an orientation of lateral member B8 can also be updated responsive to receiving the requested change to the orientation of lateral member B7.

In FIG. 7B, GUI 700 presents a visual representation 730 of an updated load distribution system 732 as a wireframe model 734 responsive to the user input identifying a requested change to lateral member B7 of load distribution system 712 of FIG. 7A. In FIG. 7B, visual representation 730 presents updated load distribution system 732 in which the orientations of lateral members B7 and B8 has been changed in relation to their orientations within load distribution system 712 of FIG. 7A. Additionally, updated data 742 representing updated component assignments for updated load distribution system 732 is presented by GUI 700 in FIG. 7B. In this example, angle A7 (e.g., 90 degrees) initially identified for lateral member B7 in FIG. 7A has been changed to an updated angle A7' (e.g., 21 degrees), and angle A8 initially identified for lateral member B8 in FIG. 7A has been changed to an updated angle A8'. Accordingly, the requested change to the assignment of components that was implemented by the computing system has been reflected within GUI 700 of FIG. 7B.

The methods and operations described herein may be tied to a computing system of one or more computing devices. In particular, such methods and operations may be implemented as a computer-application program or service, an application-programming interface (API), a library, and/or other computer-program product.

As previously described, FIG. 3 schematically depicts computing system 300 that can perform or otherwise enact the methods and operations described herein. Computing system 300 is shown in simplified form. Computing system 300 can take the form of one or more personal computers, server computers, tablet computers, network computing devices, mobile computing devices, mobile communication devices (e.g., smart phone), and/or other computing devices.

Logic subsystem 312 includes one or more physical devices configured to execute instructions. For example, the logic subsystem can execute instructions 320 that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result.

Logic subsystem 312 can include one or more processors configured to execute software instructions. Additionally or alternatively, the logic subsystem can include one or more hardware or firmware logic machines configured to execute hardware or firmware instructions. Processors of the logic subsystem can be single-core or multi-core, and the instructions (e.g., 320) executed thereon may be configured for sequential, parallel, and/or distributed processing. Individual components of the logic subsystem optionally may be distributed among two or more separate devices, which may be remotely located and/or configured for coordinated processing. Aspects of the logic subsystem can be virtualized and executed by remotely accessible, networked computing devices configured in a cloud-computing configuration.

Storage subsystem 310 includes one or more physical devices configured to hold instructions (e.g., 320) executable by logic subsystem 312 to implement the methods and operations described herein. When such methods and operations are implemented, the state of storage subsystem 310 may be transformed-e.g., to hold different data.

Storage subsystem 310 can include removable and/or built-in devices. Storage subsystem 310 can include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 310 can include volatile, nonvolatile, dynamic, static, read/write, read-only, random-access, sequential-access, location-addressable, file-addressable, and/or content-addressable devices.

It will be appreciated that storage subsystem 310 includes one or more physical devices. However, aspects of the instructions (e.g., 320) described herein alternatively can be propagated by a communication medium (e.g., an electromagnetic signal, an optical signal, etc.) that is not held by a physical device for a finite duration.

Aspects of logic subsystem 312 and storage subsystem 310 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 300 implemented to perform a particular function. In some cases, a module, program, or engine may be instantiated via logic subsystem 312 executing instructions (e.g., 320) held by storage subsystem 310. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

A display device can form part of I/O subsystem 314 or user device 316 that can be used to present a visual representation of data (e.g., 322) held by storage subsystem 310. This visual representation can take the form of a graphical user interface (GUI). As the herein described methods and operations change the data held by the storage subsystem, and thus transform the state of the storage subsystem, the state of display device may likewise be transformed to visually represent changes in the underlying data. Such display devices can be combined with logic subsystem 312 and/or storage subsystem 310 in a shared enclosure, or such display devices can be peripheral display devices.

I/O subsystem 314 can comprise or interface with one or more user input devices such as a keyboard, mouse, touch screen, or game controller. I/O subsystem 314 can include a communication subsystem configured to communicatively couple computing system 300 with one or more other computing devices. The communication subsystem can include wired and/or wireless communication devices compatible with one or more different communication protocols. As examples, the communication subsystem can be configured for communication via a wireless telephone network, or a wired or wireless local- or wide-area network. In at least some examples, the communication subsystem allows computing system 300 to send and/or receive messages to and/or from other devices via a network such as the Internet.

The disclosure comprises configurations according to the following clauses.

Clause 1. A method performed by a computing system for generating a model of a load distribution system, the method comprising: receiving a load profile for a set of load points containing a plurality of load points that identifies: a respective location of each load point of the set of load points within a three-dimensional reference frame, a respective force to be applied at each load point of the set of load points, and a force direction within the three-dimensional reference frame; performing a load segmentation loop over a plurality of iterations that includes, for an iteration (e.g., each iteration) of the plurality of iterations: selecting an iteration group of load points for the iteration from among the set of load points, determining a weighted linear regression line for the iteration group within a reference plane having a predefined orientation (e.g., orthogonal) relative to the force direction based on the respective force to be applied at the respective location of each load point of the iteration group, determining a center of force for the iteration group within the reference plane based on the respective force to be applied at the respective location of each load point of the iteration group, identifying a first subgroup of load points among the iteration group of load points that are located on a first side of a boundary line that passes through the center of force and that intersects (e.g., is orthogonal to) the linear regression line, and identifying a second subgroup of load points among the iteration group of load points that are located on a second side of the boundary line opposite the first side; wherein the iteration group selected for an initial iteration of the plurality of iterations corresponds to the set of load points; wherein the iteration group selected for subsequent iterations of the plurality of iterations corresponds to the first subgroup or the second subgroup identified by a previous iteration of the plurality of iterations; and generating the model of the load distribution system that is based on the center of force, the first subgroup, and the second subgroup of one or more iterations (e.g., each iteration) of the plurality of iterations.

Clause 2. The method of Clause 1, further comprising: terminating the load segmentation loop responsive to the first subgroup of points and the second subgroup of points of the preceding iterations of the loop containing a single load point.

Clause 3. The method of any of Clauses 1 to 2, wherein generating the model of the load distribution system includes, for one or more of the iteration groups (e.g., each iteration group of the load segmentation loop) containing two or more load points: assigning a first distal junction at the center of force determined by a subsequent iteration for the first subgroup of the iteration group within a tier boundary plane that having a predefined orientation (e.g., orthogonal) relative to the force direction; assigning a second distal junction at the center of force determined by a subsequent iteration for the second subgroup of the iteration group within the tier boundary plane; assigning a lateral member that connects the first distal junction and the second distal junction; assigning an intermediate junction along the lateral member at the center of force for the iteration group; assigning a first longitudinal member that connects the first distal junction to the intermediate junction of another iteration group corresponding to the first subgroup of the iteration group; and assigning a second longitudinal member that connects the second distal junction to the intermediate junction of another iteration group corresponding to the second subgroup of the iteration group.

Clause 4. The method of any of Clauses 1 to 3, further comprising: outputting the model by rendering a visual representation of the model for presentation via a display device.

Clause 5. The method of Clause 4, wherein the model is a wireframe model.

Clause 6. The method of any of Clauses 1 to 4, further comprising: receiving a user input identifying a requested change to the load distribution system; and implement the requested change by performing the load segmentation loop over one or more additional iterations for any iteration groups impacted by the requested change.

Clause 7. The method of Clause 6, further comprising: generating a model of an updated load distribution system that is based on the center of force, the first subgroup, and the second subgroup of each iteration of the one or more additional iterations impacted by the requested change.

Clause 8. The method of any of Clauses 1 to 7, wherein the predefined orientation of the reference plane is orthogonal to the force direction; and wherein the boundary line is orthogonal to the linear regression line.

Clause 9. The method of any of Clauses 1 to 8, wherein generating the model of the load distribution system is based on the center of force, the first subgroup, and the second subgroup of each iteration of the plurality of iterations.

Clause 10. A computing system for generating a model of a load distribution system, the computing system comprising: one or more computing devices configured to: receive a load profile for a set of load points containing a plurality of load points that identifies: a respective location of each load point of the set of load points within a three-dimensional reference frame, a respective force to be applied at each load point of the set of load points, and a force direction within the three-dimensional reference frame; perform a load segmentation loop over a plurality of iterations that includes the one or more computing devices, for an iteration (e.g., each iteration) of the plurality of iterations: selecting an iteration group of load points for the iteration from among the set of load points, determining a weighted linear regression line for the iteration group within a reference plane having a predefined orientation (e.g., orthogonal) relative to the force direction based on the respective force to be applied at the respective location of each load point of the iteration group, determining a center of force for the iteration group within the reference plane based on the respective force to be applied at the respective location of each load point of the iteration group, identifying a first subgroup of load points among the iteration group of load points that are located on a first side of a boundary line that passes through the center of force and that intersects (e.g., is orthogonal to) the linear regression line, and identifying a second subgroup of load points among the iteration group of load points that are located on a second side of the boundary line opposite the first side; wherein the iteration group selected for an initial iteration of the plurality of iterations corresponds to the set of load points; wherein the iteration group selected for subsequent iterations of the plurality of iterations corresponds to the first subgroup or the second subgroup identified by a previous iteration of the plurality of iterations; and generate the model of the load distribution system that is based on the center of force, the first subgroup, and the second subgroup of one or more iterations (e.g., each iteration) of the plurality of iterations.

Clause 11. The computing system of Clause 10, wherein the one or more computing devices being further configured to: terminate the load segmentation loop responsive to the first subgroup of points and the second subgroup of points of the preceding iterations of the loop containing a single load point.

Clause 12. The computing system of any of Clauses 10 to 11, wherein to generate the model of the load distribution system, the one or more computing devices being further configured to, for one or more iteration groups (e.g., each iteration group of the load segmentation loop) containing two or more load points: assign a first distal junction at the center of force determined by a subsequent iteration for the first subgroup of the iteration group within a tier boundary plane having a predefined orientation (e.g., orthogonal) relative to the force direction; assign a second distal junction at the center of force determined by a subsequent iteration for the second subgroup of the iteration group within the tier boundary plane; assign a lateral member that connects the first distal junction and the second distal junction; assign an intermediate junction along the lateral member at the center of force for the iteration group; assign a first longitudinal member that connects the first distal junction to the intermediate junction of another iteration group corresponding to the first subgroup of the iteration group; and assign a second longitudinal member that connects the second distal junction to the intermediate junction of another iteration group corresponding to the second subgroup of the iteration group.

Clause 13. The computing system of any of Clauses 10 to 12, wherein the one or more computing devices being further configured to: output the model by rendering a visual representation of the model for presentation via a display device.

Clause 14. The computing system of Clause 13, wherein the model is a wireframe model.

Clause 15. The computing system of any of Clauses 10 to 14, wherein the one or more computing devices being further configured to: receive a user input identifying a requested change to the load distribution system; and implement the requested change by performing the load segmentation loop over one or more additional iterations for any iteration groups impacted by the requested change.

Clause 16. The computing system of Clause 15, wherein the one or more computing devices being further configured to: generate a model of an updated load distribution system that is based on the center of force, the first subgroup, and the second subgroup of each iteration of the one or more additional iterations impacted by the requested change.

Clause 17. The computing system of any of Clauses 10 to 16, wherein the predefined orientation of the reference plane is orthogonal to the force direction; and wherein the boundary line is orthogonal to the linear regression line.

Clause 18. The computing system of any of Clauses 10 to 17, wherein the model of the load distribution system is generated based on the center of force, the first subgroup, and the second subgroup of each iteration of the plurality of iterations.

Clause 19. An article of manufacture, comprising: a storage subsystem having instructions stored thereon executable by a logic subsystem to: receive a load profile for a set of load points containing a plurality of load points that identifies: a respective location of each load point of the set of load points within a three-dimensional reference frame, a respective force to be applied at each load point of the set of load points, and a force direction within the three-dimensional reference frame; perform a load segmentation loop over a plurality of iterations that includes the logic subsystem, for an iteration (e.g., each iteration) of the plurality of iterations: selecting an iteration group of load points for the iteration from among the set of load points, determining a weighted linear regression line for the iteration group within a reference plane having a predefined orientation (e.g., orthogonal) relative to the force direction based on the respective force to be applied at the respective location of each load point of the iteration group, determining a center of force for the iteration group within the reference plane based on the respective force to be applied at the respective location of each load point of the iteration group, identifying a first subgroup of load points among the iteration group of load points that are located on a first side of a boundary line that passes through the center of force and that intersects (e.g., is orthogonal to) the linear regression line, and identifying a second subgroup of load points among the iteration group of load points that are located on a second side of the boundary line opposite the first side; wherein the iteration group selected for an initial iteration of the plurality of iterations corresponds to the set of load points; wherein the iteration group selected for subsequent iterations of the plurality of iterations corresponds to the first subgroup or the second subgroup identified by a previous iteration of the plurality of iterations; and generate the model of the load distribution system that is based on the center of force, the first subgroup, and the second subgroup of one or more iterations (e.g., each iteration) of the plurality of iterations.

Clause 20. The article of Clause 19, wherein the instructions are further executable by the logic subsystem to: terminate the load segmentation loop responsive to the first subgroup of points and the second subgroup of points of the preceding iterations of the loop containing a single load point.

Clause 21. The article of any of Clauses 19 to 20, wherein to generate the model of the load distribution system, the instructions are further executable by the logic subsystem to, for each iteration group containing two or more load points: assign a first distal junction at the center of force determined by a subsequent iteration for the first subgroup of the iteration group within a tier boundary plane having a predefined orientation (e.g., orthogonal) relative to the force direction; assign a second distal junction at the center of force determined by a subsequent iteration for the second subgroup of the iteration group within the tier boundary plane; assign a lateral member that connects the first distal junction and the second distal junction; assign an intermediate junction along the lateral member at the center of force for the iteration group; assign a first longitudinal member that connects the first distal junction to the intermediate junction of another iteration group corresponding to the first subgroup of the iteration group; and assign a second longitudinal member that connects the second distal junction to the intermediate junction of another iteration group corresponding to the second subgroup of the iteration group.

Clause 22. The article of any of Clauses 19 to 21, wherein the instructions are further executable by the logic subsystem to: output the model by rendering a visual representation of the model for presentation via a display device.

Clause 23. The article of any of Clauses 19 to 22, wherein the instructions are further executable by the logic subsystem to: receive a user input identifying a requested change to the load distribution system; and implement the requested change by performing the load segmentation loop over one or more additional iterations for any iteration groups impacted by the requested change.

Clause 24. The article of Clause 23, wherein the instructions are further executable by the logic subsystem to: generate a model of an updated load distribution system that is based on the center of force, the first subgroup, and the second subgroup of each iteration of the one or more additional iterations impacted by the requested change.

Clause 25. The article of any of Clauses 19 to 24, wherein the predefined orientation of the reference plane is orthogonal to the force direction; and wherein the boundary line is orthogonal to the linear regression line.

Clause 26. The article of any of Clauses 19 to 25, wherein the model of the load distribution system is generated based on the center of force, the first subgroup, and the second subgroup of each iteration of the plurality of iterations.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (400) performed by a computing system (300) for generating a model (373) of a load distribution system (200), the method (400) comprising:
receiving a load profile (356) for a set of load points (520) containing a plurality of load points (580-1, 580-2) that identifies:
a respective location (414) of each load point (580-1, 580-2) of the set of load points (520) within a three-dimensional reference frame,
a respective force (416) to be applied at each load point (580-1, 580-2) of the set of load points (520), and
a force direction (418) within the three-dimensional reference frame;
performing a load segmentation loop (423) over a plurality of iterations (426, 428) that includes, for an iteration (426, 428) of the plurality of iterations (426, 428):
selecting an iteration group (540-1) of load points for the iteration (426, 428) from among the set of load points (520),
determining a weighted linear regression line (550-1) for the iteration group (540-1) within a reference plane (510) having a predefined orientation relative to the force direction (418) based on the respective force (416) to be applied at the respective location (414) of each load point of the iteration group (540-1),
determining a center of force (560-1) for the iteration group (540-1) within the reference plane (510) based on the respective force (416) to be applied at the respective location (414) of each load point of the iteration group (540-1),
identifying a first subgroup (580-1) of load points among the iteration group (540-1) of load points that are located on a first side (572-1) of a boundary line (570-1) that passes through the center of force (560-1) and that intersects the linear regression line (550-1), and
identifying a second subgroup (580-2) of load points among the iteration group (540-1) of load points that are located on a second side (574-1) of the boundary line (570-1) opposite the first side (572-1);
wherein the iteration group (540-1) selected for an initial iteration (426) of the plurality of iterations (426, 428) corresponds to the set of load points (520);
wherein the iteration group (540-1) selected for subsequent iterations (428) of the plurality of iterations (426, 428) corresponds to the first subgroup (580-1) or the second subgroup (580-2) identified by a previous iteration (426) of the plurality of iterations (426, 428); and
generating the model (373) of the load distribution system (200) that is based on the center of force (560-1), the first subgroup (580-1), and the second subgroup (580-2) of one or more iterations (426, 428) of the plurality of iterations (426, 428).

2. The method (400) of claim 1, further comprising:
terminating the load segmentation loop (423) responsive to the first subgroup (580-1) of points and the second subgroup (580-2) of points of the preceding iterations (426) of the loop (423) containing a single load point.

3. The method (400) of claim 1 or 2, wherein generating the model (373) of the load distribution system (200) includes, for one or more of the iteration groups (540-1, 540-2) containing two or more load points:
assigning a first distal junction (640-6.1D) at the center of force (560-1) determined by a subsequent iteration (428) for the first subgroup (580-1) of the iteration group (540-1) within a tier boundary plane (510) having a predefined orientation relative to the force direction (418);
assigning a second distal junction (640-6.2D) at the center of force (560-1) determined by a subsequent iteration (428) for the second subgroup (580-2) of the iteration group (540-1) within the tier boundary plane (510);
assigning a lateral member (630-6) that connects the first distal junction (640-6.1D) and the second distal junction (640-6.2D);
assigning an intermediate junction (640-6I) along the lateral member (630-6) at the center of force (560-1) for the iteration group (540-1);
assigning a first longitudinal member (620-11) that connects the first distal junction (640-6.1D) to the intermediate junction (640-4I) of another iteration group (540-1.1) corresponding to the first subgroup (580-1) of the iteration group (540-1); and
assigning a second longitudinal member (620-12) that connects the second distal junction (640-6.2D) to the intermediate junction (640-5I) of another iteration group (540-1.2) corresponding to the second subgroup (580-2) of the iteration group (540-1).

4. The method (400) of any of claims 1 to 3, further comprising:
outputting the model (373) by rendering a visual representation (710) of the model (373) for presentation via a display device (314).

5. The method of claim 4, wherein the model (373) is a wireframe model (714).

6. The method (400) of any of claims 1 to 5, further comprising:
receiving a user input (364) identifying a requested change (476) to the load distribution system (200); and
implement the requested change (476) by performing the load segmentation loop (423) over one or more additional iterations (428) for any iteration groups (540-1) impacted by the requested change (476).

7. The method (400) of claim 6, further comprising:
generating a model (373) of an updated load distribution system (732) that is based on the center of force (560-1), the first subgroup (580-1), and the second subgroup (580-2) of each iteration (428) of the one or more additional iterations (428) impacted by the requested change (476).

8. The method (400) of any of claims 1 to 7, wherein the predefined orientation of the reference plane (510) is orthogonal to the force direction (418); and
wherein the boundary line (570-1) is orthogonal to the linear regression line (550-1).

9. The method (400) of any of claims 1 to 8, wherein generating the model (373) of the load distribution system (200) is based on the center of force (560-1), the first subgroup (580-1), and the second subgroup (580-2) of each iteration (426, 428) of the plurality of iterations (426, 428).

10. A computing system (300) for generating a model (373) of a load distribution system (200), the computing system (300) comprising:
one or more computing devices (300) configured to:
receive a load profile (356) for a set of load points (520) containing a plurality of load points (580-1, 580-2) that identifies:
a respective location (414) of each load point of the set of load points (520) within a three-dimensional reference frame,
a respective force (416) to be applied at each load point of the set of load points (520), and
a force direction (418) within the three-dimensional reference frame;
perform a load segmentation loop (423) over a plurality of iterations (426, 428) that includes the one or more computing devices (300), for an iteration (426, 428) of the plurality of iterations (426, 428):
selecting an iteration group (540-1) of load points for the iteration (426, 428) from among the set of load points (520),
determining a weighted linear regression line (550-1) for the iteration group (540-1) within a reference plane (510) having a predefined orientation relative to the force direction (418) based on the respective force (416) to be applied at the respective location (414) of each load point of the iteration group (540-1),
determining a center of force (560-1) for the iteration group (540-1) within the reference plane (510) based on the respective force (416) to be applied at the respective location (414) of each load point of the iteration group (540-1),
identifying a first subgroup (580-1) of load points among the iteration group (540-1) of load points that are located on a first side (572-1) of a boundary line (570-1) that passes through the center of force (560-1) and that intersects the linear regression line (550-1), and
identifying a second subgroup (580-2) of load points among the iteration group (540-1) of load points that are located on a second side (574-1) of the boundary line (570-1) opposite the first side (572-1);
wherein the iteration group (540-1) selected for an initial iteration (426) of the plurality of iterations (426, 428) corresponds to the set of load points (520);
wherein the iteration group (540-1) selected for subsequent iterations (428) of the plurality of iterations (426, 428) corresponds to the first subgroup (580-1) or the second subgroup (580-2) identified by a previous iteration (426) of the plurality of iterations (426, 428); and
generate the model (373) of the load distribution system (200) that is based on the center of force (560-1), the first subgroup (580-1), and the second subgroup (580-2) of one or more iterations (426, 428) of the plurality of iterations (426, 428).

11. The computing system (300) of claim 10, wherein the one or more computing devices (300) being further configured to:
terminate the load segmentation loop (423) responsive to the first subgroup (580-1) of points and the second subgroup (580-2) of points of the preceding iterations (426) of the loop (423) containing a single load point.

12. The computing system (300) of claim 10 or 11, wherein to generate the model (373) of the load distribution system (200), the one or more computing devices (300) being further configured to, for one or more of the iteration groups (540-1, 540-2) containing two or more load points:
assign a first distal junction (640-6.1D) at the center of force (560-1) determined by a subsequent iteration (428) for the first subgroup (580-1) of the iteration group (540-1) within a tier boundary plane (510) having a predefined orientation relative to the force direction (418);
assign a second distal junction (640-6.2D) at the center of force (560-1) determined by a subsequent iteration (428) for the second subgroup (580-2) of the iteration group (540-1) within the tier boundary plane (510);
assign a lateral member (630-6) that connects the first distal junction (640-6.1D) and the second distal junction (640-6.2D);
assign an intermediate junction (640-6I) along the lateral member (630-6) at the center of force (560-1) for the iteration group (540-1);
assign a first longitudinal member (620-11) that connects the first distal junction (640-6.1D) to the intermediate junction (640-4I) of another iteration group (540-1.1) corresponding to the first subgroup (580-1) of the iteration group (540-1); and
assign a second longitudinal member (620-12) that connects the second distal junction (640-6.2D) to the intermediate junction (640-5I) of another iteration group (540-1.2) corresponding to the second subgroup (580-2) of the iteration group (540-1).

13. The computing system (300) of any of claims 10 to 12, wherein the one or more computing devices (300) being further configured to:
output the model (373) by rendering a visual representation (710) of the model (373) for presentation via a display device.

14. The computing system (300) of any of claims 10 to 13, wherein the predefined orientation of the reference plane (510) is orthogonal to the force direction (418); and
wherein the boundary line (570-1) is orthogonal to the linear regression line (550-1).

15. An article of manufacture (301), comprising:
a storage subsystem having instructions (320) stored thereon executable by a logic subsystem (312) to:
receive a load profile (356) for a set of load points (520) containing a plurality of load points (580-1, 580-2) that identifies:
a respective location (414) of each load point of the set of load points (520) within a three-dimensional reference frame,
a respective force (416) to be applied at each load point of the set of load points (520), and
a force direction (418) within the three-dimensional reference frame;
perform a load segmentation loop (423) over a plurality of iterations (426, 428) that includes the logic subsystem (312), for an iteration (426, 428) of the plurality of iterations (426, 428):
selecting an iteration group (540-1) of load points for the iteration (426, 428) from among the set of load points (520),
determining a weighted linear regression line (550-1) for the iteration group (540-1) within a reference plane (510) having a predefined orientation relative to the force direction (418) based on the respective force (416) to be applied at the respective location (414) of each load point of the iteration group (540-1),
determining a center of force (560-1) for the iteration group (540-1) within the reference plane (510) based on the respective force (416) to be applied at the respective location (414) of each load point of the iteration group (540-1),
identifying a first subgroup (580-1) of load points among the iteration group (540-1) of load points that are located on a first side (572-1) of a boundary line (570-1) that passes through the center of force (560-1) and that intersects the linear regression line (550-1), and
identifying a second subgroup (580-2) of load points among the iteration group (540-1) of load points that are located on a second side (574-1) of the boundary line (570-1) opposite the first side (572-1);
wherein the iteration group (540-1) selected for an initial iteration (426) of the plurality of iterations (426, 428) corresponds to the set of load points (520);
wherein the iteration group (540-1) selected for subsequent iterations (428) of the plurality of iterations (426, 428) corresponds to the first subgroup (580-1) or the second subgroup (580-2) identified by a previous iteration (426) of the plurality of iterations (426, 428); and
generate the model (373) of the load distribution system (200) that is based on the center of force (560-1), the first subgroup (580-1), and the second subgroup (580-2) of one or more iterations (426, 428) of the plurality of iterations (426, 428).
